# EUROPEAN PATENT APPLICATION

(11) **EP 2 487 818 A1**
(43) Date of publication of application: **15.08.2012**
(21) Application number: 12167149.9
(22) Date of filing: 16.06.2008
(51) Int. Cl.: H04H 60/27, H04H 20/63

(54) **Broadcast receiver with several tuners**

(30) Priority: 15.06.2007 GB 0711643
(62) Divisional of application: 08762379.9
(71) Applicant: British Sky Broadcasting Limited, Middlesex TW7 5QD (GB)
(72) Inventor: James, Nicholas, Wallington, Surrey SM6 0TD (GB); Bodkin, Nigel, Windsor, Berkshire SL4 5AY (GB); Griffith, Steven, Isleworth, Middlesex TW7 5QD (GB); Willame, Xavier, Isleworth, Middlesex TW7 5QD (GB); Collins, Ellen Fiona, Isleworth, Middlesex TW7 5QD (GB); Safouane, Dounia, Isleworth, Middlesex TW7 5QD (GB)
(74) Representative: Petzold, Silke

(57) **Abstract**

A broadcast receiver (3) provides independent viewing of live or recorded programmes to primary and secondary locations (42a, 42b), which may share a common planner showing information on programmes selected for recording. The receiver (3) applies rules to govern the use of tuners to prevent conflicts between the two locations. Global settings may be altered only at the primary location (42a), while local settings may be applied independently at either location. Pay per view and day pass functions may be shared between locations.

## Description

### Field of the Invention

The present invention relates to a broadcast receiver and a method of operation thereof.

### Background of the Invention

Satellite and cable receivers are usually provided in a set-top box (STB) separate from, but connectable to a television set. The STB decodes audio and video signals from a satellite or cable broadcast and outputs them to the television set through a SCART (Syndicat Français des Constructeurs d'Appareils Radio et Télévision, the body which standardised the format) or RF connector.

If satellite or cable television is to be available in more than one room in a household, separate STB's may be provided in each room at additional cost. However, STB's may store records of programmes selected for future viewing, and/or recordings of programmes previously broadcast, and users may want to access the same set of programmes regardless of where they are in the household.

Patent publication WO00/04707 discloses an interactive program guide system with multiple set-top boxes, wherein user settings are coordinated between the different STB's.

Examples of satellite receiver STB's provided by the applicant, British Sky Broadcasting Ltd., are the Sky® Digibox® and Sky⁺® set top boxes. Both of these have a second RF output to allow connection to a secondary display. The second RF output can be connected to a display in another room, and IR control signals can be relayed from the other room to the STB by a relay system. One such system is the Global® tvLINK® system available from Global Communication (UK) Ltd., Althorne, Essex, UK.

The applicant's patent publication WO 05/074265 discloses an STB with primary and secondary video outputs for connection to TV's at primary and secondary locations, the TV's having different display formats. The receiver can output video signals suitable for either format, but applies the same format to both the primary and secondary video outputs. The receiver detects whether control signals are arriving from the primary or secondary location, and automatically selects the correct format.

### Statement of the Invention

According to one aspect of the present invention, there is provided a broadcast receiver, comprising:
a. a plurality of tuners tuneable to a corresponding plurality of broadcast channels to receive currently broadcast programmes;
b. first and second outputs and corresponding first and second control inputs for connection to corresponding first and second locations;
c. recording selection means for receiving recording selections via the first and second control inputs of programmes currently broadcast or scheduled to be broadcast on the broadcast channels;
d. recording means for recording programmes from the broadcast channels in accordance with said recording selections; and
e. output means for selectively outputting to the first and second outputs one or more of said recorded programmes and/or currently broadcast programmes in response to viewing selections received via the corresponding said first and second control inputs;
wherein the output means is arranged to output a first said programme on said first output concurrently with a second said programme on said second output.

Preferably, said plurality of tuners includes first and second tuners reserved for tuning to currently broadcast programmes for output to the first and second locations.

Preferably, the broadcast receiver includes at least one further tuner reserved for tuning to programmes for recording by said recording means.

Preferably, the recording means is arranged to record a programme in response to a said recording selection from the corresponding location while the programme is being output to said corresponding location.

Preferably, the broadcast receiver is arranged to output to the corresponding location an indication that the currently output programme is being recorded, without outputting a corresponding indication to another said location.

Preferably, the broadcast receiver is arranged to respond to a selection to cease outputting the currently output programme at the corresponding location, to continue recording said programme if at least said one further tuner reserved for recording is available.

Preferably, the broadcast receiver is arranged to respond a selection to cease outputting the currently output programme at the corresponding location, to prompt the user to resolve a clash condition if no said one further tuner reserved for recording is available.

Preferably, the broadcast receiver is arranged to store recording information indicating programmes selected for recording according to said recording selections, and to output said information to either of said first or second locations in response to a recording information request from the corresponding one of said control inputs.

Preferably, the broadcast receiver is arranged to add information on the currently viewed programme to said recording information after completion of recording of the currently viewed programme.

Preferably, the broadcast receiver is arranged to select between information relating to recording of the same programme in response to said user selections from said first and second inputs, for addition to said recording information.

Preferably, the output means is further arranged to output a same said programme with on said first and second outputs, the output being independently controllable via the corresponding control inputs.

Preferably, the broadcast receiver includes deletion means for selectively deleting said recorded programmes in response to deletion requests from the first or second control inputs, wherein the deletion means is inhibited from deleting one of said recorded programmes in response to a deletion request from one of said control inputs while said recorded programme is being output to one of said outputs not corresponding to said one control input.

Preferably, the broadcast receiver is operable according to at least one global setting that affects said output to the first and second outputs, the global setting being variable by said first control input without being variable by said second control input.

Preferably, said global setting comprises a restricted access setting.

Preferably, said global setting comprises a display setting applicable to both said first and second outputs.

Preferably, the broadcast receiver is operable according to at least one local setting affecting only said first or said second output and variable by the corresponding one of the control inputs.

Preferably, said local setting comprises a favourite channel setting that determines ones of said broadcast channels for which programme information is output for selection via the corresponding input.

Preferably, said local setting comprises a display setting for said affected output.

Preferably, output of one of said recorded programmes is controlled according to a setting specific to that recorded programme, the setting being variable according to an input from either of said control inputs.

Preferably, said programme-specific setting comprises a point to which the programme was last viewed.

Preferably, said programme-specific setting comprises a skip point or bookmark.

Preferably, at least one of said programmes is a pay programme having an individual charge associated therewith, wherein selection of said pay program via both said first and second control inputs incurs only one instance of said individual charge.

Preferably, the broadcast receiver includes a period pass feature providing unrestricted access to a function of said receiver for a predetermined time, wherein said feature is made available to both said first and second locations in response to selection of the period pass feature from either location.

Preferably, said function of the receiver is made available to both said first and second locations concurrently.

Preferably, said function of the receiver is made available to only one of said first and second locations at any one time.

According to another aspect of the present invention, there is provided a broadcast receiver comprising:
a. first and second outputs and corresponding first and second control inputs for connection to corresponding first and second locations;
b. recording selection means for receiving recording selections via the first and second control inputs of programmes currently broadcast or scheduled to be broadcast;
c. recording means for recording programmes in accordance with said recording selections;
d. output means for selectively outputting to the first and second outputs one or more of said recorded programmes and/or currently broadcast programmes in response to viewing selections received via the corresponding said first and second control inputs; and
e. means for storing recording information indicating programmes selected for recording according to said recording selections, and to output said information to either of said first or second locations in response to a recording information request from the corresponding one of said control inputs.

According to another aspect of the present invention, there is provided a broadcast receiver comprising:
a. first and second outputs and corresponding first and second control inputs for connection to corresponding first and second locations;
b. recording selection means for receiving recording selections via the first and second control inputs of programmes currently broadcast or scheduled to be broadcast;
c. recording means for recording programmes in accordance with said recording selections;
d. output means for selectively outputting to the first and second outputs one or more of said recorded programmes and/or currently broadcast programmes in response to viewing selections received via the corresponding said first and second control inputs; and
e. deletion means for selectively deleting said recorded programmes in response to deletion requests from the first or second control inputs, wherein the deletion means is inhibited from deleting one of said recorded programmes in response to a deletion request from one of said control inputs while said recorded programme is being output to one of said outputs not corresponding to said one control input.

According to another aspect of the present invention, there is provided a broadcast receiver comprising:
a. first and second outputs and corresponding first and second control inputs for connection to corresponding first and second locations;
b. recording selection means for receiving recording selections via the first and second control inputs of programmes currently broadcast or scheduled to be broadcast;
c. recording means for recording programmes in accordance with said recording selections; and
d. output means for selectively outputting to the first and second outputs one or more of said recorded programmes and/or currently broadcast programmes in response to viewing selections received via the corresponding said first and second control inputs;
wherein the broadcast receiver is operable according to at least one global setting that affects said output to the first and second outputs, the global setting being variable by said first control input without being variable by said second control input.

According to another aspect of the present invention, there is provided a broadcast receiver comprising:
a. first and second outputs and corresponding first and second control inputs for connection to corresponding first and second locations;
b. recording selection means for receiving recording selections via the first and second control inputs of programmes currently broadcast or scheduled to be broadcast;
c. recording means for recording programmes in accordance with said recording selections; and
d. output means for selectively outputting to the first and second outputs one or more of said recorded programmes and/or currently broadcast programmes in response to viewing selections received via the corresponding said first and second control inputs;
wherein the broadcast receiver is operable according to at least one local setting affecting only said first or said second output and variable by the corresponding one of the control inputs.

According to another aspect of the present invention, there is provided a broadcast receiver comprising:
a. first and second outputs and corresponding first and second control inputs for connection to corresponding first and second locations;
b. recording selection means for receiving recording selections via the first and second control inputs of programmes currently broadcast or scheduled to be broadcast;
c. recording means for recording programmes in accordance with said recording selections; and
d. output means for selectively outputting to the first and second outputs one or more of said recorded programmes and/or currently broadcast programmes in response to viewing selections received via the corresponding said first and second control inputs;
wherein output of one of said recorded programmes is controlled according to a setting specific to that recorded programme, the setting being variable according to an input from either of said control inputs.

According to another aspect of the present invention, there is provided a broadcast receiver comprising:
a. first and second outputs and corresponding first and second control inputs for connection to corresponding first and second locations;
b. recording selection means for receiving recording selections via the first and second control inputs of programmes currently broadcast or scheduled to be broadcast;
c. recording means for recording programmes in accordance with said recording selections; and
d. output means for selectively outputting to the first and second outputs one or more of said recorded programmes and/or currently broadcast programmes in response to viewing selections received via the corresponding said first and second control inputs;
wherein at least one of said programmes is a pay programme having an individual charge associated therewith, wherein selection of said pay programme via both said first and second control inputs incurs only one instance of said individual charge.

According to another aspect of the present invention, there is provided a broadcast receiver comprising:
a. first and second outputs and corresponding first and second control inputs for connection to corresponding first and second locations;
b. recording selection means for receiving recording selections via the first and second control inputs of programmes currently broadcast or scheduled to be broadcast;
c. recording means for recording programmes in accordance with said recording selections; and
d. output means for selectively outputting to the first and second outputs one or more of said recorded programmes and/or currently broadcast programmes in response to viewing selections received via the corresponding said first and second control inputs;
wherein the broadcast receiver includes a period pass feature providing unrestricted access to a function of said receiver for a predetermined time, wherein said feature is made available to both said first and second locations in response to selection of the period pass feature from either location.

According to another aspect of the present invention, there is provided a method of operating a broadcast receiver having a plurality of tuners tuneable to a corresponding plurality of broadcast channels, and first and second outputs and corresponding first and second control inputs for connection to corresponding first and second locations; the method comprising:
a. receiving recording selections via the first and second control inputs of programmes currently broadcast or scheduled to be broadcast on the broadcast channels;
b. recording programmes from the broadcast channels in accordance with said recording selections; and
c. selectively outputting to the first and second outputs one or more of said recorded programmes and/or currently broadcast programmes in response to viewing selections received via the corresponding said first and second control inputs;
wherein a first said programme is output on said first output concurrently with a second said programme on said second output.

Preferably, the method includes reserving first and second said tuners for tuning to currently broadcast programmes for output to the first and second locations.

Preferably, the method includes reserving at least one further one of said tuners for tuning to programmes for recording by said recording means.

Preferably, the method includes recording a programme in response to a said recording selection from the corresponding location while the programme is being output to said corresponding location.

Preferably, the method includes outputting to the corresponding location an indication that the currently output programme is being recorded, without outputting a corresponding indication to another said location.

Preferably, the method includes responding to a request to cease outputting the currently output programme at the corresponding location, by continuing recording said programme if at least said one further tuner reserved for recording is available.

Preferably, the method includes responding to a viewing selection to cease outputting the currently output programme at the corresponding location, by prompting the user to resolve a clash condition if no said one further tuner reserved for recording is available.

Preferably, the method includes storing recording information indicating programmes selected for recording according to said recording selections, and outputting said information to either of said first or second locations in response to a recording information request from the corresponding one of said control inputs.

Preferably, the method includes adding information on the currently viewed programme to said recording information after completion of recording of the currently viewed programme.

Preferably, the method includes selecting between information relating to recording of the same programme in response to said user selections from said first and second inputs, for addition to said recording information.

Preferably, the method includes outputting a same said programme on said first and second outputs with corresponding independent viewing control on said first and second control inputs.

Preferably, the method includes selectively deleting said recorded programmes in response to deletion requests from the first or second control inputs, wherein deletion of one of said recorded programmes is inhibited in response to a deletion request from one of said control inputs while said recorded programme is being output to one of said outputs not corresponding to said one control input.

Preferably, output to the first and second outputs is controlled according to at least one global setting that is variable by said first control input without being variable by said second control input.

Preferably, said global setting comprises a restricted access setting.

Preferably, said global setting comprises a display setting applicable to both said first and second outputs.

Preferably, output to the first and second outputs is controlled according to at least one local setting affecting only said first or said second output and variable by the corresponding one of the control inputs.

Preferably, said local setting comprises a favourite channel setting that determines ones of said broadcast channels for which programme information is output for selection via the corresponding input.

Preferably, said local setting comprises a display setting for said affected output.

Preferably, output of one of said recorded programmes is controlled according to a setting specific to that recorded programme, the setting being variable according to an input from either of said control inputs.

Preferably, said programme-specific setting comprises a point to which the programme was last viewed.

Preferably, said programme-specific setting comprises a skip point or bookmark.

Preferably, at least one of said programmes is a pay programme having an individual charge associated therewith, wherein selection of said pay program via both said first and second control inputs incurs only one instance of said individual charge.

Preferably, the method includes a period pass feature providing unrestricted access to a function of said receiver for a predetermined time, wherein said function is made available to both said first and second locations in response to selection of the period pass feature from either location.

Preferably, said function of the receiver is made available to both said first and second locations concurrently.

Preferably, said function of the receiver is made available to only one of said first and second locations at any one time.

According to another aspect of the present invention, there is provided a method of operating a broadcast receiver having first and second outputs and corresponding first and second control inputs for connection to corresponding first and second locations, the method comprising:
a. receiving recording selections via the first and second control inputs of programmes currently broadcast or scheduled to be broadcast;
b. recording programmes in accordance with said recording selections;
c. selectively outputting to the first and second outputs one or more of said recorded programmes and/or currently broadcast programmes in response to viewing selections received via the corresponding said first and second control inputs; and
storing recording information indicating programmes selected for recording according to said recording selections, and to output said information to either of said first or second locations in response to a recording information request from the corresponding one of said control inputs.

According to another aspect of the present invention, there is provided a method of operating a broadcast receiver having first and second outputs and corresponding first and second control inputs for connection to corresponding first and second locations, the method comprising:
a. receiving recording selections via the first and second control inputs of programmes currently broadcast or scheduled to be broadcast;
b. recording programmes in accordance with said recording selections;
c. selectively outputting to the first and second outputs one or more of said recorded programmes and/or currently broadcast programmes in response to viewing selections received via the corresponding said first and second control inputs; and
selectively deleting said recorded programmes in response to deletion requests from the first or second control inputs, wherein deletion of one of said recorded programmes is inhibited while said recorded programme is being output to one of said outputs not corresponding to said one control input.

According to another aspect of the present invention, there is provided a method of operating a broadcast receiver having first and second outputs and corresponding first and second control inputs for connection to corresponding first and second locations, the method comprising:
a. receiving recording selections via the first and second control inputs of programmes currently broadcast or scheduled to be broadcast;
b. recording programmes in accordance with said recording selections; and
c. selectively outputting to the first and second outputs one or more of said recorded programmes and/or currently broadcast programmes in response to viewing selections received via the corresponding said first and second control inputs;
wherein output to the first and second outputs is controlled according to at least one global setting that is variable by said first control input without being variable by said second control input.

According to another aspect of the present invention, there is provided a method of operating a broadcast receiver having first and second outputs and corresponding first and second control inputs for connection to corresponding first and second locations, the method comprising:
a. receiving recording selections via the first and second control inputs of programmes currently broadcast or scheduled to be broadcast;
b. recording programmes in accordance with said recording selections; and
c. selectively outputting to the first and second outputs one or more of said recorded programmes and/or currently broadcast programmes in response to viewing selections received via the corresponding said first and second control inputs;
wherein output to the first and second outputs is controlled according to at least one local setting affecting only said first or said second output and variable by the corresponding one of the control inputs.

According to another aspect of the present invention, there is provided a method of operating a broadcast receiver having first and second outputs and corresponding first and second control inputs for connection to corresponding first and second locations, the method comprising:
a. receiving recording selections via the first and second control inputs of programmes currently broadcast or scheduled to be broadcast;
b. recording programmes in accordance with said recording selections; and
c. selectively outputting to the first and second outputs one or more of said recorded programmes and/or currently broadcast programmes in response to viewing selections received via the corresponding said first and second control inputs;
wherein output of one of said recorded programmes is controlled according to a setting specific to that recorded programme, the setting being variable according to an input from either of said control inputs.

According to another aspect of the present invention, there is provided a method of operating a broadcast receiver having first and second outputs and corresponding first and second control inputs for connection to corresponding first and second locations, the method comprising:
a. receiving recording selections via the first and second control inputs of programmes currently broadcast or scheduled to be broadcast;
b. recording programmes in accordance with said recording selections; and
c. selectively outputting to the first and second outputs one or more of said recorded programmes and/or currently broadcast programmes in response to viewing selections received via the corresponding said first and second control inputs;
wherein at least one of said programmes is a pay programme having an individual charge associated therewith, wherein selection of said pay programme via both said first and second control inputs incurs only one instance of said individual charge.

According to another aspect of the present invention, there is provided a method of operating a broadcast receiver having first and second outputs and corresponding first and second control inputs for connection to corresponding first and second locations, the method comprising:
a. receiving recording selections via the first and second control inputs of programmes currently broadcast or scheduled to be broadcast;
b. recording programmes in accordance with said recording selections; and
c. selectively outputting to the first and second outputs one or more of said recorded programmes and/or currently broadcast programmes in response to viewing selections received via the corresponding said first and second control inputs;
wherein the method includes providing unrestricted access to a function of said receiver for a predetermined time, wherein said function is made available to both said first and second locations in response to selection of the period pass feature from either location.

According to another aspect of the invention, there is provided a computer program arranged to perform the above method.

Preferably, the computer program is recorded on a carrier.

### Brief Description of the Drawings

Specific embodiments of the present invention will now be described with reference to the accompanying drawings, in which:
Figure 1 is a block diagram of the functional components of a satellite broadcast receiver according to the state of the art;
Figure 2 is a diagram of the external input and output connectors of the satellite broadcast receiver;
Figure 3 is a diagram showing an arrangement of the receiver in a first embodiment of the invention; and
Figure 4 is a flowchart of the operation of a foreground clash resolution algorithm executed by the receiver.

### Detailed Description of Embodiments of the Invention

### Broadcast Receiver

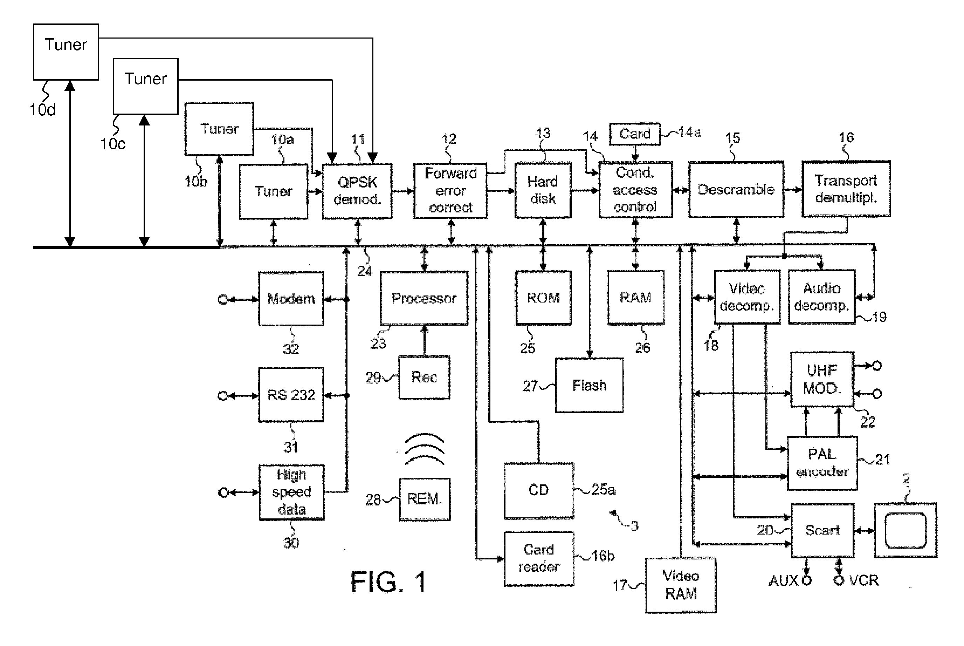

Figure 1 of the accompanying drawings shows a satellite broadcast receiver 3 for receiving television signals from a satellite television broadcast network. In this example, received signals are input to first and second tuners 10a, 10b, although any plural number of tuners may be used in the receiver 3. The tuners 10a, 10b are tuneable into the same or different channels of the satellite television broadcast network for simultaneous reception of the same or different television programmes. Signals from the tuners 10a, 10b are passed to a Quadrature Phase Shift Key (QPSK) demodulator 11. Demodulated signals are error-corrected by way of a forward error corrector circuit 12. The receiver 3 has a hard disk 13 which receives from the forward error corrector circuit 12 compressed video and audio data representing received television programmes for recording and subsequent playback, as described in greater detail below.

The received signals comprise digitally encoded data. In this example, the data is compressed using the Digital Video Broadcast/Moving Pictures Expert Group 2 (DVB/MPEG 2) standard which permits both programme data and additional data (for example interactive service data) to be transmitted in a single channel. DVB/MPEG 2 enables high compression ratios to be achieved. The hard disk 13 receives and stores compressed data. The data is decompressed only after retrieval from the hard disk 13.

Satellite (and indeed cable) programmes are usually scrambled to prevent unauthorised access by non-authorised subscribers. The receiver 3 therefore has a conditional access control circuit 14 which co-operates with a smart card 14a to determine whether the viewer has subscribed to a particular channel and is therefore authorised to access the channel. Parental control over channel access is also provided, at least in part, by the access control circuit 14. The receiver 3 further comprises a descrambling circuit 15 which is controlled by the access control circuit 14 to enable the descrambling of the signal by authorised subscribers.

Descrambled data is supplied to a transport/demultiplexer 16 which separates the data into video data, audio data, user services data, programme scheduling data, etc. for distribution to various locations within the receiver 3. The receiver 3 also comprises a video decompression and processing circuit 18 utilizing a dedicated video Random Access Memory (RAM) 17, and an audio decompression and processing circuit 19, operating according to the MPEG 2 standard, for example. The video and audio decompression and processing circuits 18 and 19 receive demultiplexed signals directly from the transport/demultiplexer 16, or from the hard disk 13. Decompressed video signals are input to a SCART interface 20 for direct input to a television set (TV) 2 and to a Phase Alternation Line (PAL) encoder 21 where they are encoded into the PAL format for modulation by an Ultra High Frequency (UHF) modulator 22 for output to the UHF input of the TV 2 if so desired.

The receiver 3 is controlled by a processor 23 which communicates with the various units of the receiver via a bus 24. The processor 23 has associated with it Read Only Memory (ROM) 25 (optionally including a Compact Disc - Read Only Memory (CD-ROM) drive 25a), Random Access Memory (RAM 26) and a flash (non-volatile and writable) memory 27.

The processor 23 controls operation of the receiver 3 by tuning the tuners 10a, 10b to receive signals for the desired channels by controlling the demultiplexing, descrambling and decompression so that the desired programme and/or interactive service data is displayed on the screen of the TV 2, and by controlling the hard disk 13 to record desired television programmes or to play back previously recorded television programmes. Viewer selection of desired programmes and customer services is controlled by viewer manipulation of a remote control unit 28, which in response to such viewer manipulation transmits control signals to a receiver 29 for input to the processor 23. The remote control unit 28 also allows the viewer to control of the operation of the hard disk 13 to record television programmes, to play back recorded television programmes and to program the recording of television programmes, etc.

The receiver 3 further comprises a high-speed data interface 30 and a Recommended Standard 232 (RS232) interface 31 providing a serial link. The high-speed data interface 30 and the RS232 interface 31 may be connected to a personal computer (PC) and/or a games console and/or other digital equipment (not shown). The high speed data interface 30 enables the receiver 3 to be connected to other devices (not shown), for example to enable reception of services transmitted via other media such as broadband cable, external storage media or digital terrestrial broadcast. The receiver 3 further comprises a modem interface 32 for connection to a telephone network.

Operation of the receiver 3 is controlled by software that makes the processor 23 responsive to control signals from the remote control unit 28, additional data in the received signals and/or data stored in the memory units 25 to 27. Interaction between hardware and software in the receiver 3 is described in detail in our international patent application published as WO 01/11865. Operation of the receiver 3 in receiving and decoding data representing television programmes and data defining scheduling and other information related to the programmes is described in detail in our international patent application published as WO 96/37996. Operation of the receiver 3 in providing interactive services is described in our international patent application published as WO 97/23997.

### Electronic Programme Guide

Within the Digital Video Broadcasting (DVB) standard for digital television broadcast there exists a standard for the transmission of schedule information such that it can be decoded and presented correctly to subscribers in the form of an Electronic Programme Guide (EPG). This DVB standard is known generally as the SI standard and can be found in the specification: ETS 300 468, ETSI Digital Broadcasting Systems for Television, Sound and Data Services; Specification for Service Information (SI) in Digital Video Broadcasting (DVB) Systems 2nd edition. Guidelines for using the specification are given in ETSI ETR 211 - DVB SI Guidelines. The receiver 3 is designed to support the SI specification.

In addition to operating data for use in controlling access to channels, additional data in a channel can include brief programme schedule data representative of so-called event information tables (EITs) defining the scheduling of programmes in each channel. The programme schedule data is used by the receiver 3 to control the operation of the hard disk 13. When the receiver 3 is programmed to record a selected television programme, the receiver 3 operates the hard disk 13 to start and to stop the recording in accordance with the programme schedule data which comprises the start and the end time of the selected television programme. Since the programme schedule data is updated regularly, the recording is started and stopped in accordance with the updated programme schedule, thus guaranteeing that a selected television programme is actually recorded even in case of a change of programme schedule, because such change is reflected in the programme schedule data in each channel.

The programme schedule data may be stored in the RAM 26 and, once stored, the scheduling information is available effectively instantaneously for controlling the operation of the hard disk 13. As discussed above, the programme schedule data is transmitted regularly so that the receiver 3 will be updated substantially continuously. The information is brief to enable each channel to carry the programme schedule data without excessive overheads in terms of bandwidth requirements in each channel and memory requirements in the receiver.

In addition, a dedicated EPG channel transmits more detailed programme scheduling information. The information transmitted via this dedicated channel is updated more frequently and covers a longer period of time (e.g. one week). As a consequence, an up-to-date television programme schedule of a complete week will always be available. As explained in greater detail below, the receiver 3 is arranged to display the programme scheduling information on the TV 2. Also, a viewer can interact with the receiver 3 to program recordings of television programmes, view a desired part of the available programme schedule, etc., on the basis of the information received via the dedicated EPG channel.

Accordingly, while the programme schedule data in each channel is used by the receiver 3 to operate the hard disk 13 to record a selected television programme in a selected channel at the correct up-to-date time, the programme scheduling information in the dedicated EPG channel is used to display the programme schedule for several of the channels over a predetermined period of time, which in turn is used for programming the receiver 3 as described below.

Since the tuners 10a, 10b can be tuned to receive different channels, it is possible for a first television programme in one channel to be displayed on a TV and recorded on the hard disk 13, while at the same time a second television programme in another channel is also recorded on the hard disk 13.

The hard disk 13 of the receiver 3 is similar to conventional hard disks used in computer systems for storing large amounts of data. The hard disk 13 has a capacity of many gigabytes (e.g. 40 or 160 gigabytes) and receives video and audio data for storage in the compressed form in which it is received, for example, in accordance with the DVB/MPEG 2 standards as discussed above. This allows for the storage of several hours of television programmes on the hard disk 13. The hard disk 13 comprises two storage areas, one for the storage of television programme data, and the other for storing metadata which is used to control the hard disk 13, as discussed in greater detail in our earlier patent publications mentioned above. The processor 23 controls the operation of the hard disk 13. More-specifically, the processor 23 controls the recording and playback of television programmes to and from the hard disk 13. Other processors (not shown) can be used to control the hard disk 13 as appropriate, but the control is described in this document with reference to only processor 23 to facilitate understanding.

One example of an EPG is the Sky™ TV Guide, which allows the user to select programmes by type (e.g. Entertainment, Movies, Sport etc.) and to view the programmes in a time and channel guide. The user highlights a programme from the guide, using keys to scroll around the guide as necessary, and then selects whether to record that programme, or to set a reminder to view the programme.

Programmes selected by the user for recording or viewing are added to a planner. For programmes selected for recording, the planner may display the recording status such as 'recording', 'recorded', 'part recorded', 'failed' or 'clashed'. A clash occurs when multiple concurrent programmes are selected for recording, and there are insufficient tuners 10 available to record all of those programmes. Preferably, the EPG detects a clash when the user selects a programme for recording and asks the user to cancel one or more of the recordings. However, clashes may arise after user selection if any of the selected programmes are rescheduled such that they overlap with other selected programmes.

### Receiver Interfaces

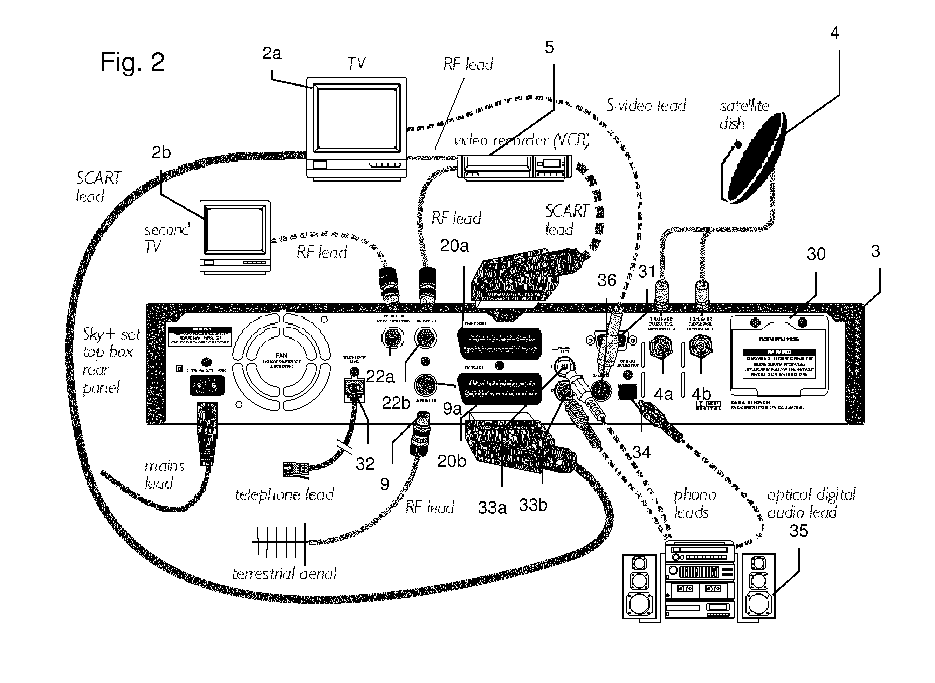

Figure 2 shows in more detail the interfaces to the receiver 3, in this case a Sky⁺® set top box, further details of which are described in the 'Sky+ User's Guide', available on 22nd January 2004 at:
http://www1.sky.com/products/skyplus/Sky+_PVR1.pdf
the contents of which are incorporated herein by reference.

To avoid repetition, where the same references are used in Figure 1 and Figure 2, the references in Figure 2 denote the external interface of the component shown in Figure 1.

A satellite dish 4 receives signals from the satellite television broadcast network and provides these to first and second satellite dish inputs 4a, 4b. Terrestrial television broadcast signals are received by terrestrial aerial 9 and provided to a terrestrial aerial input 9a. The UHF modulator 22 provides a primary RF interface 22a for connection to a primary TV 2a, optionally as in this case via an external video recorder 5, and a secondary RF interface 22b for connection to a secondary TV 2b. The SCART interface 20 includes a video recorder SCART socket 20a and a TV SCART socket 20b. A Separate Video (S-Video) connector 36 provides an alternative output to the primary TV 2a, if this has an S-Video input. Left and right channel audio outputs 33a, 33b, and optical digital audio output 34, for connection to external audio reproduction equipment 35, output the audio signals from the channel to which the receiver 3 is tuned.

### First and Second Locations

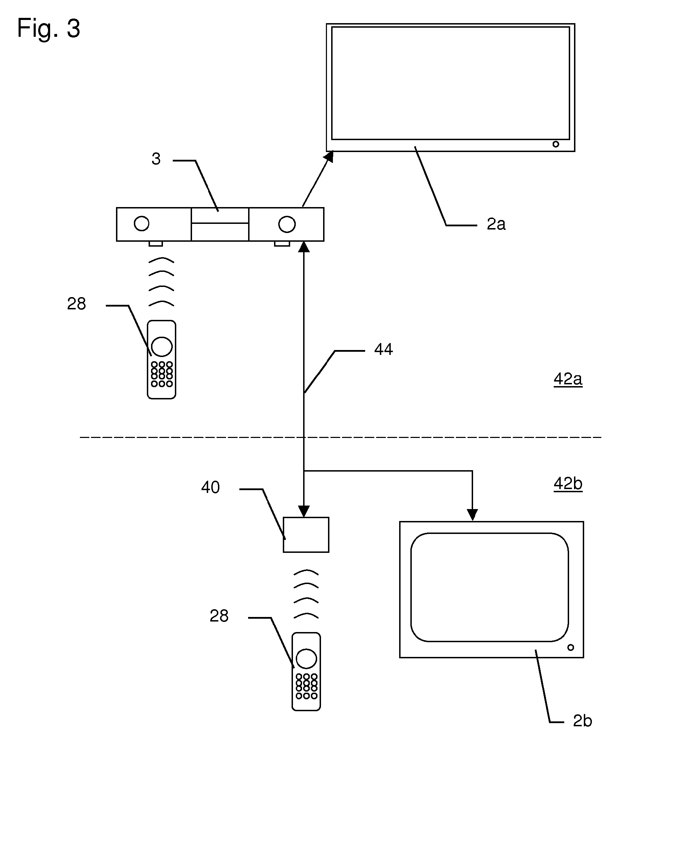

An arrangement of the receiver 3 is shown in Figure 3. The receiver 3 and primary TV 2a are at a first location 42a, together with a remote 28 actuable by a user to send control signals to the receiver 3 via an IR link. A secondary location 42b is remote from the first location 42a. A secondary TV 2b is at the secondary location 42b and is connected to the receiver 3 through the secondary RF interface 22b by means of a connector 44. The connector 44 may be a coaxial cable, or a wireless audio/video sender. A remote control extender 40 receives the IR control signals from the remote 28 and relays them to the receiver. The remote 28 can be carried between the primary location 42a and the secondary location 42b, or different remotes could be used at each location.

### Independent Operation

As further shown in Figure 1, the receiver 3 in an embodiment of the invention includes third and fourth tuners 10c, 10d, but may include more or fewer than four tuners. Multiple tuners may be shared between different locations served by the same receiver 3, allowing independent viewing of live and/or recorded programmes at two or more different locations. The planner is preferably shared between the different locations, so that each location can view the same set of programmes stored in the planner, including programmes selected by other locations. However, this may give rise to conflicts between the different locations, as described below.

### Foreground and Background Tuners

In an embodiment of the invention, the receiver 3 applies one or more rules relating to the usage of the tuners 10a to 10d at the primary and secondary locations 42a, 42b; the corresponding users at these locations will be referred to hereafter as primary and secondary users. Since primary and secondary users are permitted to select programmes for recording or viewing independently of each other, there is an increased risk of recording clash, in which more programmes are selected for concurrent recording that can be supported by the available number of tuners. Preferably, sufficient tuners must be available to allow at least one and preferably all users to view live broadcasts, at least some of the time. Each tuner may be designated as either a 'foreground' tuner reserved for viewing, or a 'background' tuner reserved for recording. If there are four tuners and two locations, for example, two tuners may be designated as foreground tuners and two tuners as background tuners. Preferably, the number of designated foreground tuners is equal to the number of locations.

### Foreground and Background Recordings

Programmes that a user selects for recording are categorized into foreground and background recordings. A foreground recording is an unscheduled recording of a programme that is initiated while the programme is being viewed. For example, the user may select 'record' while watching a programme, so that the programme is recorded for subsequent viewing. The programme may have been stored in a storage buffer prior to selection for recording by the user, in which case the programme may be recorded from before the point at which the user selected the programme for recording, by storing data from the buffer.

A foreground recording is location specific, in that the receiver 3 only indicates to the user that initiated the recording that the foreground recording is in progress. Foreground recording may be indicated by overlaying a 'recording' icon or other indication on the programme being viewed and/or on a programme listing that may be called up by that user, such as the Sky+ 'Search and Scan Banner'. In this way, a foreground recording does not intrude at another location, at which another user may be watching a different programme (which may itself be selected as a foreground recording by that user).

A foreground recording is viewable in the planner once the programme has ended, independently of location. Alternatively, if the user tunes away from the programme before it has ended, the programme is viewable immediately in the planner independently of the location, and the receiver 3 continues to record the programme; in that case, the recording becomes a background recording, as described further below.

Background recordings are scheduled recordings, selected for recording in advance of the start of the programme, or unscheduled recordings that are no longer being viewed, as described above. Background recordings are not location specific, in that the receiver 3 can indicate to any user, regardless of location, that the programme has been or is being recorded. A background recording is also viewable by both primary and secondary users concurrently but with independent viewing control; for example, the users may view the same programme but at different points within the programme. The users may also apply different viewing modes and/or operations, such as different viewing speeds, view forwards or backwards, fast forward or rewind.

The same programme may be both a foreground and a background recording, if it is both scheduled for recording and selected for recording during live viewing. In this case only one copy of the programme is stored in the planner. However, the foreground and background recordings may not be identical, for example because one of the recordings was interrupted, or because the beginning of the programme was not stored in the recording buffer. The recording that complies with one or more of the following priority rules is stored in the planner:
1) a background recording that is being played back;
2) a recording that contains the end of the programme;
3) the longer recording of that programme;
4) the recording already in the planner.

### Foreground Recording Clash Management

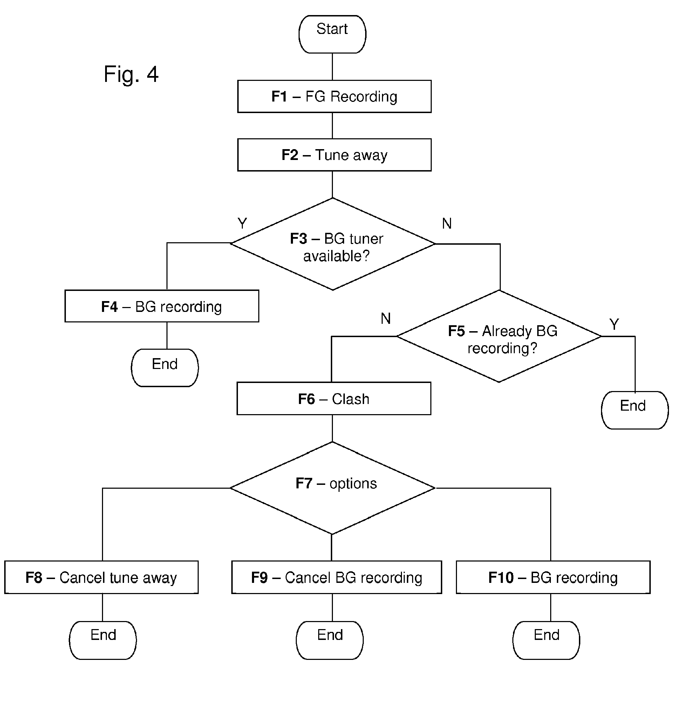

With reference to the flowchart of Figure 4, when a user is watching and recording a programme as a foreground recording (F1), and then attempts to tune away (F2), the foreground recording becomes a background recording (F4) provided that there is an available background tuner (F3). In the specific example described above in which there are two designated background tuners, the foreground recording becomes a background recording if there is a background tuner available i.e. in this example, only one or no background tuners are already being used for recording.

If there are no available background tuners (F3), and the currently watched programme is not already being recorded by another tuner as a background recording (F5), a recording clash condition is entered (F6). For example, a recording clash message may be displayed to inform the user that recording of the current programme cannot be continued. The user may select from an option (F7) to cancel tuning away (F8), to cancel a background recording (F9) and/or to cease recording the current programme (F10).

### Background Recording Clash Management

If there are two or more background tuners, the same number of concurrent background recordings may be scheduled without entering a clash condition. If a user requests a further concurrent background recording, then the receiver 3 resolves the clash condition automatically without displaying a clash message to the user requesting the further recording, or to any other user. The clash condition may be resolved by prioritisation rules, e.g. one or more of:
1) ?? Doesn't Sky+ ask the user to resolve the clash?

If the hard disk 13 is full or there is insufficient capacity to record a requested programme, a warning message may be displayed to the user who has requested the recording. Optionally, the warning message may be displayed to all users, to prompt them to delete unwanted recordings and thereby make more capacity available.

If more than one user tunes away from a foreground recording at substantially the same time and thereby both enter a clash condition, the receiver 3 prioritizes between requests from different users so as to resolve the clash condition. For example, user selections are actioned as they are received, and the clash condition is reviewed after each user selection to determine whether the clash condition has been resolved. If the condition has not been resolved, the users are prompted to make further selections so as to resolve the clash condition.

### Deletion Clash

If one user requests deletion of a recording that is being viewed by another user, the deletion request is not actioned and a message to this effect is displayed to the requesting user. No message is displayed to the viewing user.

### Global and Local Settings

Operation of the receiver may be varied according to local and global settings. Global settings affect all locations. Preferably, global settings may only be changed from the primary location. Alternatively, global settings may be changed from any location, preferably subject to entry of a PIN or other means for controlling access to global settings.

Examples of global settings include:
1) Restricted access settings, such as changing a restricted access PIN, parental control settings, spending limit for pay-per-view,
2) Location-independent display settings

Local settings affect only the location from which they were set. Examples of local settings include:
1) Favourites settings, such as favourite channels
2) Location dependent display settings, such as aspect ratio and/or contrast.

Other settings may be specific to recorded programmes, and can be set by any user for a specific recorded programme. Examples of programme-specific settings include:
1) Last viewed position - defined as the last viewed frame by the user who last watched the programme
2) Viewer-defined skip points or bookmarks

### Pay-per-view

Users may select a pay-per-view (PPV) programme, for which an individual charge is made against a customer account. Access restrictions may be applied to control whether the programme can be recorded for later viewing or only viewed live, whether the programme can be viewed more than once etc.

If the same PPV programme is requested from more than one location, this is treated as a single request and only one individual charge is made. A message is displayed to the user making the later request, stating that the PPV programme has already been requested.

A PPV programme may have an associated rental period, such that the programme can only be viewed for a predetermined period after the first viewing of the programme. In this case, the first viewing is defined as the first viewing from any location. Optionally, a PPV programme may have an associated preview facility whereby the programme may be previewed without incurring the associated charge. In that case, a programme being previewed from one location may not be viewed from another location.

### Period Pass

Users may purchase a period pass, providing unlimited access to a predetermined channel or service for a predetermined period. For example, a user may purchase a 'one day pass' for interactive games. Purchase of a period pass from one location may provide the same access from other locations. Access may be provided simultaneously to more than one location, or may be restricted to only one location at any one time.

### Alternative Embodiments

The programmes described above may be audio programmes (e.g. radio programmes), audiovisual programmes (e.g. television programmes) or video-only programmes.

Although the above embodiments are described with reference to first and second locations, aspects of the invention are applicable to more than two locations; for example, the receiver 3 may be connectable simultaneously to n locations, with at least *n*+1 tuners and preferably at least 2n tuners. *n* tuners may be designated as foreground tuners.

The above embodiments are described purely by way of example, and other embodiments of the invention may be envisaged which nevertheless fall within the scope of the following claims.

## Claims

1. A broadcast receiver, comprising:
a. a plurality of tuners tuneable to a corresponding plurality of broadcast channels to receive currently broadcast programmes;
b. first and second outputs and corresponding first and second control inputs for connection to corresponding first and second locations;
c. recording selection means for receiving recording selections via the first and second control inputs of programmes currently broadcast or scheduled to be broadcast on the broadcast channels;
d. recording means for recording programmes from the broadcast channels in accordance with said recording selections; and
e. output means for selectively outputting to the first and second outputs one or more of said recorded programmes and/or currently broadcast programmes in response to viewing selections received via the corresponding said first and second control inputs;
wherein the output means is arranged to output a first said programme on said first output concurrently with a second said programme on said second output.

2. The broadcast receiver of claim 1, wherein said plurality of tuners includes first and second tuners reserved for tuning to currently broadcast programmes for output to the first and second locations.

3. The broadcast receiver of claim 2, including at least one further tuner reserved for tuning to programmes for recording by said recording means.

4. The broadcast receiver of claim 3, wherein the recording means is arranged to record a programme in response to a said recording selection from the corresponding location while the programme is being output to said corresponding location.

5. The broadcast receiver of claim 4, arranged to output to the corresponding location an indication that the currently output programme is being recorded, without outputting a corresponding indication to another said location.

6. The broadcast receiver of any preceding claim, arranged to store recording information indicating programmes selected for recording according to said recording selections, and to output said information to either of said first or second locations in response to a recording information request from the corresponding one of said control inputs, arranged to select between information relating to recording of the same programme in response to said user selections from said first and second inputs, for addition to said recording information.

7. The broadcast receiver of any preceding claim, wherein the output means is further arranged to output a same said programme with on said first and second outputs, the output being independently controllable via the corresponding control inputs.

8. The broadcast receiver of any preceding claim, including deletion means for selectively deleting said recorded programmes in response to deletion requests from the first or second control inputs, wherein the deletion means is inhibited from deleting one of said recorded programmes in response to a deletion request from one of said control inputs while said recorded programme is being output to one of said outputs not corresponding to said one control input.

9. The broadcast receiver of any preceding claim, wherein output of one of said recorded programmes is controlled according to a setting specific to that recorded programme, the setting being variable according to an input from either of said control inputs.

10. The broadcast receiver of claim 9, wherein said programme-specific setting comprises a point to which the programme was last viewed.

11. The broadcast receiver of claim 9, wherein said programme-specific setting comprises a skip point or bookmark.

12. The broadcast receiver of any preceding claim, wherein at least one of said programmes is a pay programme having an individual charge associated therewith, wherein selection of said pay program via both said first and second control inputs incurs only one instance of said individual charge.

13. The broadcast receiver of any preceding claim, including a period pass feature providing unrestricted access to a function of said receiver for a predetermined time, wherein said feature is made available to both said first and second locations in response to selection of the period pass feature from either location.

14. The broadcast receiver of claim 13, wherein said function of the receiver is made available to both said first and second locations concurrently.

15. A method of operating a broadcast receiver having a plurality of tuners tuneable to a corresponding plurality of broadcast channels, and first and second outputs and corresponding first and second control inputs for connection to corresponding first and second locations; the method comprising:
a. receiving recording selections via the first and second control inputs of programmes currently broadcast or scheduled to be broadcast on the broadcast channels;
b. recording programmes from the broadcast channels in accordance with said recording selections; and
c. selectively outputting to the first and second outputs one or more of said recorded programmes and/or currently broadcast programmes in response to viewing selections received via the corresponding said first and second control inputs;
wherein a first said programme is output on said first output concurrently with a second said programme on said second output.
